# EUROPÄISCHE PATENTSCHRIFT

(11) **EP 3 908 475 B1**
(45) Veröffentlichungstag und Bekanntmachung des Hinweises auf die Patenterteilung: **08.03.2023**
(21) Anmeldenummer: 19835270.0
(22) Anmeldetag: 18.12.2019
(51) Int. Cl.: B60K 37/06, G06F 3/01

(54) **BEDIENVORRICHTUNG ZUR BEDIENUNG MINDESTENS EINES GERÄTES UND VERFAHREN ZUR BEDIENUNG EINER SOLCHEN BEDIENVORRICHTUNG**
OPERATING DEVICE FOR OPERATING AT LEAST ONE APPLIANCE, AND METHOD FOR OPERATING SUCH AN OPERATING DEVICE
DISPOSITIF D'UTILISATION POUR UTILISER AU MOINS UN APPAREIL ET PROCÉDÉ POUR L'UTILISATION D'UN TEL DISPOSITIF D'UTILISATION

(30) Priorität: 07.01.2019 DE 102019200090
(43) Veröffentlichungstag der Anmeldung: 17.11.2021
(73) Patentinhaber: Continental Automotive Technologies GmbH, 30165 Hannover (DE)
(72) Erfinder: BRÜNINGHAUS, Andreas, 60488 Frankfurt am Main (DE); FEINEIS, Susanne, 60488 Frankfurt am Main (DE); THIEL, Kerstin, 60488 Frankfurt am Main (DE); BEILKER, Dirk, 60488 Frankfurt am Main (DE); NEUMANN, Thorsten, 60488 Frankfurt am Main (DE)
(74) Vertreter: Continental Corporation
(86) Internationale Anmeldenummer: PCT/EP2019/085870
(87) Internationale Veröffentlichungsnummer: WO 2020/144016

(56) Entgegenhaltungen:
- EP-A2- 2 503 438
- WO-A1-2011/161310
- US-A1- 2012 105 333

## Beschreibung

Die Erfindung betrifft eine Bedienvorrichtung zur Bedienung mindestens eines Gerätes und ein Verfahren zur Bedienung einer solchen Bedienvorrichtung. Aus dem Stand der Technik sind derartige Bedienvorrichtungen und Verfahren bekannt, bei denen die Bedienvorrichtung eine Oberfläche mit einer Form und mit einer Anzeige aufweist und wobei bei Annäherung eines Bedienorgans in Richtung der Bedienvorrichtung die Form der Oberfläche verändert und die Anzeige eingeschaltet wird. Derartige Bedienvorrichtungen werden auch als "Morphing Controls" bezeichnet und sind auch zum Einsatz in Kraftfahrzeugen vorgesehen. Hierbei wird die Oberfläche zur Darstellung von Schaltern oder Darstellung von Bedienelementen von Schaltern verändert. Die eigentliche Schaltfunktion kann dann je nach Ausführung der Bedienvorrichtung durch ein reines Berühren (ohne zusätzlichen Kraftaufwand) oder durch ein Drücken des dargestellten Schalters oder dargestellten Bedienelements des Schalters erfolgen. Bei einem Drücken des dargestellten Schalters oder dargestellten Bedienelements des Schalters erfolgt an den Bediener noch zusätzlich eine haptische Rückmeldung über die ausgeführte Schaltfunktion. Insbesondere in Kraftfahrzeugen ist es bei Bedienung von Geräten, die den Kraftfahrer während einer Fahrt von seiner eigentlichen Aufgabe des Führens des Kraftfahrzeuges ablenken können und so die Gefahr der Verursachung eines Verkehrsunfalls stark erhöhen können wichtig, dass die Ablenkung des Kraftfahrers durch eine solche Bedienung möglichst gering ist.

Die US 2012/105333 A1 beschreibt eine Bedienvorrichtung zur Bedienung mindestens eines Gerätes, wobei die Bedienvorrichtung eine Oberfläche mit einer Form und mit einer Anzeige aufweist und wobei bei Annäherung eines Bedienorgans in Richtung der Bedienvorrichtung die Form der Oberfläche verändert und die Anzeige eingeschaltet wird.

Die WO 2011/161310 A1 beschreibt eine Bedienvorrichtung mit einem mindestens einen Eingabemodus, dem eine erste Funktion zugeordnet ist und eine zweite Funktion, die einer Berührungseingabe an einer Eingabeoberfläche zugeordnet ist, die das Anzeigen eines dreidimensionalen virtuellen Benutzeroberflächenelements bewirken und als Reaktion auf das Erkennen eines Eingabeobjekts innerhalb eines Schutzbereichs in Bezug auf die Eingabeoberfläche anpassen.

Die EP 2 503 438 A2 beschreibt eine Bedienvorrichtung mit einem Endgerätekörper, einer Anzeigeeinheit, einer Erfassungseinheit und einer Steuerung. Die Anzeigeeinheit kann auf dem Endgerätkörper ausgebildet und konfiguriert sein, um ein dreidimensionales stereoskopisches Bild anzuzeigen, das ein erstes und ein zweites Objekt enthält. Die Erfassungseinheit kann an dem Endgerätekörper angebracht sein, um den Ort eines Erfassungsziels in einem Erfassungsbereich zu erfassen, der dem dreidimensionalen stereoskopischen Bild entspricht. Darüber hinaus kann die Steuerung dazu konfiguriert sein, das erste Objekt basierend auf dem Ort des Erfassungsziels auszuwählen, das erste Objekt entlang der Bewegung des Erfassungsziels in einem Zustand zu bewegen, in dem das erste Objekt ausgewählt ist, und mindestens ein Objekt dazwischen zu erzeugen ersten und dem zweiten Objekt, wenn ein Abstand zwischen dem ersten und dem zweiten Objekt in einer Richtung aufgrund der Bewegung des ersten Objekts vergrößert wird.

Aufgabe der Erfindung ist es daher, eine Bedienvorrichtung anzugeben, bei der die Ablenkung des Kraftfahrers weiter verringert wird. Diese Aufgabe wird durch eine vorstehend beschriebene Bedieneinrichtung gelöst, bei der zusätzlich bei einem Eindringen des Bedienorgans in einen ersten, von der Bedienvorrichtung entfernteren Bereich die Anzeige teilweise oder vollständig eingeschaltet wird und bei einem Eindringen des Bedienorgans in einen zweiten, der Bedienvorrichtung näheren Bereich die Form der Oberfläche verändert wird. Die veränderte Oberfläche kann Bedienelemente in Form von Schaltern oder Bedienelementen von Schaltern darstellen. Hierdurch wird erreicht, dass nach Eindringen des Bedienorgans in den ersten Bereich vor der Bedieneinrichtung durch einen flüchtigen Blick die Position der bedienbaren Schalter oder Bedienelemente von Schaltern sichtbar wird und so gegebenenfalls noch eine Korrektur der Bewegung hin zum gewünschten Schalter bzw. Bedienelement des gewünschten Schalters ausgeführt werden kann und dann nach dem Berühren der Oberfläche der gewünschte Schalter betätigt werden kann. Es ist auch möglich, mehr als zwei Bereiche vorzusehen und so die Anzeigen beim Eindringen eines Bedienorgans in den der Bedienvorrichtung entferntesten Bereich beispielsweise zunächst nicht vollständig, sondern nur teilweise einzuschalten und dann beim Eindringen des Bedienorgans in einen der Bedienvorrichtung näheren Bereich vollständiger oder vollständig einzuschalten. Die Verformung der Oberfläche kann durch einen beliebigen Antrieb, insbesondere eines Elektromotors jedweder Bauweise erfolgen.

Die Ablenkung kann durch eine den unterschiedlichen Schaltaufgaben unterschiedliche Form aufweisende Bedienelemente weiter verringert werden, da dem Kraftfahrer dann durch die Form des Schalters bzw. die Form des Bedienelements des Schalters durch den Tastsinn eine Rückmeldung über den Schalter gegeben werden kann, ohne dass er seinen Blick vom Verkehrsgeschehen rund um das Kraftfahrzeug abwenden muss. Wenn der Schalter zu seiner Bedienung nicht nur berührt, sondern auch gedrückt werden muss und dadurch die Oberfläche der Bedienvorrichtung verändert wird, erfolgt zusätzlich eine haptische Rückmeldung über die Betätigung des Schalters.

Wenn die die Anzeige zur Darstellung des zu bedienenden Gerätes und/oder eines Wertes, insbesondere eines Messwertes oder des Betriebszustands des mindestens einen Gerätes, ausgestaltet ist, kann der Bediener klar die dem Schalter zugewiesene Schaltfunktion erkennen. Die Darstellung eines zu bedienenden Gerätes kann beispielsweise als Piktogramm erfolgen.
Die Anzeige kann beispielsweise als Flüssigkristallanzeige (LCD), organische Leuchtdioden-Anzeige (OLED) oder Microdioden-Anzeige (Micro-LED) ausgestaltet sein.

Wenn die Form der Oberfläche als mindestens eine Erhöhung und/oder mindestens eine Vertiefung veränderbar ist und mit der Form der veränderten Oberfläche Schalter oder Bedienelemente von Schaltern darstellbar sind, kann der Schalter bzw. das Bedienelement des Schalters auch durch den Tastsinn wahrgenommen werden.

Die Anzeige kann nach dem Bedienungsvorgang dauerhaft eingeschaltet bleiben, teilweise dauerhaft eingeschaltet bleiben, insgesamt oder teilweise nach einer bestimmten Zeit ausgeschaltet werden oder insgesamt nach dem Bedienungsvorgang dauerhaft ausgeschaltet bleiben. So können beispielsweise Messwerte und/ oder Steuergrößen von zu bedienenden Geräten dauerhaft dargestellt werden, während die Darstellung der zu bedienenden Geräte ausgeschaltet wird.

Wenn die Anzeige kann nach dem Bedienungsvorgang dauerhaft oder teilweise dauerhaft eingeschaltet bleibt, kann ein Bediener ständig die dargestellten Informationen wie beispielsweise einen Betriebszustand des zu bedienenden Geräts wahrnehmen. Wenn die Anzeige insgesamt oder teilweise nach einer bestimmten Zeit ausgeschaltet wird oder insgesamt nach dem Bedienungsvorgang dauerhaft ausgeschaltet bleibt kann eine Ablenkung des Bedieners verringert werden. Beim Einsatz der letztgenannten Lösung in Kraftfahrzeugen kann insbesondere bei Dunkelheit eine Spiegelung der Anzeige in Fenstern, insbesondere der Windschutzscheibe des Kraftfahrzeuges, sicher verhindert und eine ansonsten dadurch mögliche unnötige Störung des Kraftfahrers verhindert werden.

Sofern bei einer Bewegung des Eingabeorgans parallel zur Oberfläche die Anzeige nicht eingeschaltet wird, kann verhindert werden, dass bei einer Bewegung des Bedienorgans vor der Bedienvorrichtung ohne Bedienungsabsicht seitens des Bedieners der Bedienvorrichtung der Bediener durch ein Einschalten der Anzeige abgelenkt oder gestört wird. Als parallele Bewegung wird hierbei in der weiteren Beschreibung auch eine Bewegung gesehen, die Bewegungsanteile senkrecht zur Oberfläche aufweist, die Hauptbewegungsrichtung aber parallel zur Oberfläche ist, beispielsweise wenn ein Bedienorgan mit dem Arm eines Bedieners verbunden ist und der Bediener den Arm oder das Bedienorgan nicht vollständig sondern nur weitgehend parallel zur Oberfläche führt.

Falls bei einer Bewegung des Eingabeorgans parallel zur Oberfläche die Oberfläche nicht verformt wird kann verhindert werden, dass bei einer Bewegung des Bedienorgans vor der Bedienvorrichtung ohne Bedienungsabsicht seitens des Bedieners der Bedienvorrichtung der Bediener durch eine Verformung der Oberfläche abgelenkt wird. So kann beispielsweise vorgesehen sein, dass durch eine parallele Bewegung des Eingabeorgans die Anzeige vollständig oder teilweise eingeschaltet oder je nach Betriebszustand auch vollständig oder teilweise ausgeschaltet wird. Hierbei wird vorzugsweise eine Verformung der Oberfläche nicht durchgeführt. Hierdurch kann dann die Anzeige bedient werden unabhängig vom Abstand des Bedienorgans. Die Anzeige oder Teile der Anzeige können nach einer Bedienung dauerhaft oder nur eine bestimmte Zeit eingeschaltet bleiben. Auch kann vorgesehen sein, dass bei eingeschalteter Anzeige durch eine parallele Bewegung des Eingabeorgans zur Oberfläche die Anzeige teilweise oder vollständig ausgeschaltet wird.

Wenn als Bedienorgan ein Finger, insbesondere ein Zeigefinger einer Bedienperson verwendet wird sind keine zusätzlichen Bedienorgane erforderlich und so eine einfache Bedienung möglich.
Sofern die Bedienvorrichtung eine Sensorvorrichtung zum Feststellen der Position und/oder Bewegung des Eingabeorgans aufweist kann eine Erfassung der Position des sichergestellt werden. Diese Sensoreinheit kann beispielsweise als Radar-, Lidar- oder Kapazitiv-Einheit ausgestaltet sein.

Falls die Bedienvorrichtung mit einer Sensorvorrichtung zum Feststellen der Position und/oder Bewegung des Eingabeorgans verbunden ist kann eine Sensorvorrichtung in der Nähe der Bedienvorrichtung verwendet werden und so auf eine zusätzliche Sensorvorrichtung verzichtet werden. Sofern der Einsatz der Bedienvorrichtung in einem Kraftfahrzeug vorgesehen ist kann auf eine heute in Kraftfahrzeugen meist vorhandene Kamera zurückgegriffen werden, aus deren Bildern sich die Position und/oder Bewegung des Eingabeorgans ermitteln lässt. Wenn die Bedienvorrichtung über einen Datenbus mit dem zu bedienenden Gerät oder dem Steuergerät des zu bedienenden Gerätes verbunden ist kann sie zur Bedienung aller an den Datenbus angeschlossenen Geräte verwendet werden. Dies können bei einem Einsatz der Bedienvorrichtung in einem Kraftfahrzeug beispielsweise das Radio, das Navigationssystem oder die Steuergeräte der Klimaanlage, des Tempomaten oder der Fensterheber sein.

Wenn bei einem erfindungsgemäßen Verfahren bei einem Eindringen des Bedienorgans in den ersten, von der Bedienvorrichtung entfernteren Bereich die Anzeige eingeschaltet wird und bei einem Eindringen des Bedienorgans in den zweiten, der Bedienvorrichtung näheren Bereich die Form der Oberfläche verändert wird, wird ein Bediener bei der Bedienung des zu bedienenden Gerätes unterstützt da er das Bedienorgan besser in Richtung des zu bedienenden Bedienelements führen kann.

Dadurch, dass mit der Anzeige das zu bedienende Gerät und/oder ein Wert, insbesondere ein Messwert oder ein Betriebszustand des mindestens einen Gerätes dargestellt wird kann die Funktion der Bedienelemente leicht erfasst werden.

Wenn die Form der Oberfläche als mindestens eine Erhöhung und/oder mindestens eine Vertiefung verändert wird werden leicht ertastbare Elemente geschaffen. Hierbei können die Erhöhungen /und oder Vertiefungen sprunghaft oder allmählich ansteigend bzw. allmählich abfallend ausgestaltet sein.

Sofern mit der Form der Oberfläche mindestens ein Schalter oder mindestens ein Bedienelement eines Schalters darstellt wird, kann durch die Form der Oberfläche eine intuitive Information über die Funktion des Schalters gegeben werden.
Falls bei einer Bewegung des Eingabeorgans parallel zur Oberfläche die Anzeige nicht eingeschaltet wird, wird ein unbeabsichtigtes Einschalten der Anzeige und damit eine Ablenkung oder Störung des Bedieners verhindert.

Wenn bei einer Bewegung des Eingabeorgans parallel zur Oberfläche die die Oberfläche nicht verformt wird, kann eine eine Ablenkung des Bedieners verhindert werden.

Die Erfindung wird nachfolgend anhand der Figuren näher beschrieben. Es zeigen:
Figur 1a einen Schnitt durch ein erstes Ausführungsbeispiel einer erfindungsgemäßen Bedienvorrichtung
Figur 1b den Schnitt und die Ansicht aus Figur 1a in einer fortgeschrittenen Bediensituation,
Figur 1c den Schnitt und die Ansicht aus Figur 1b in einer fortgeschrittenen Bediensituation,
Figur 1d den Schnitt und die Ansicht aus Figur 1c in einer fortgeschrittenen Bediensituation,
Figur 1e den Schnitt und die Ansicht aus Figur 1d in einer beendeten Bediensituation,
Figur 2a eine Aufsicht auf ein zweites Ausführungsbeispiel einer erfindungsgemäßen Bedienvorrichtung,
Figur 2b eine Aufsicht auf das Ausführungsbeispiel aus Figur 2a und Teile einer Hand eines Bedieners in einer ersten Bediensituation,
Figur 2c eine Aufsicht auf das Ausführungsbeispiel aus Figur 2b mit der vollständigen Hand eines Bedieners in einer zweiten Bediensituation,
Figur 2d eine Aufsicht auf das Ausführungsbeispiel aus Figur 2 in einer dritten Bediensituation,
Figur 2e eine Aufsicht auf das Ausführungsbeispiel aus Figur 2d ohne Hand eines Bedieners nach Beendigung der Bediensituation.

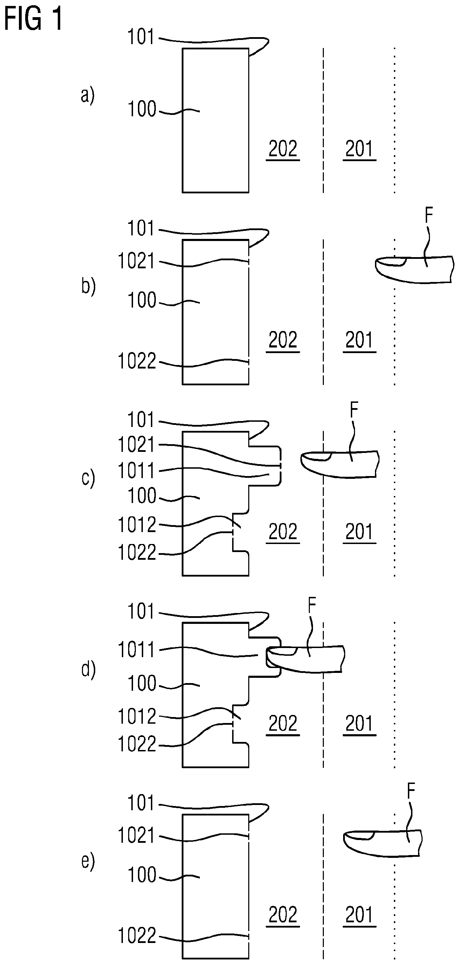

In Figur 1a erkennt man den Schnitt durch eine Bedienvorrichtung 100 mit einer Oberfläche 101. Weiterhin sind ein erster Bereich 201 und ein zweiter Bereich 202 dargestellt, wobei der zweite Bereich 202 sich zwischen der Oberfläche 101 und dem ersten Bereich 202 befindet.

In den Figuren 1b-1e erkennt man noch zusätzlich jeweils ein Bedienorgan in Form eines Fingers F einer ansonsten nicht dargestellten Bedienperson.
In Figur 1b dringt der Finger F in den ersten Bereich 201 ein und eine Anzeige 1021 und eine zweite Anzeige 1022 werden eingeschaltet und so für die Bedienperson wahrnehmbar.

In Figur 1c dringt der Finger F in den zweiten Bereich 202 ein, so dass die Oberfläche 101 der Bedienvorrichtung 100 zu einer Verformung in Form einer Erhebung 1011 und einer Vertiefung 1012 verformt werden, die so ein herausstehendes bzw. vertieftes Bedienelement bilden. Es können bei einer Bedienvorrichtung auch nur Erhebungen oder Vertiefungen gebildet werden.

In Figur 1d drückt der Finger F auf die Erhebung 1011, verformt sie dadurch und löst den Bedienvorgang durch das Bediengerät aus. Die Erhebungen und/oder Vertiefungen können auch so ausgestaltet sein, dass sie beim Druck durch ein Bedienorgan auf ihre Oberfläche vollständig ähnlich eines Bedienelements eines Schalters verschoben werden.

In Figur 1e hat der Finger F den zweiten Bereich 202 verlassen, die Oberfläche 101 des Bediengerätes 100 weist keine Verformungen in Form von Erhebungen oder Vertiefungen mehr auf. Die Anzeigen 1021, 1022 sind noch eingeschaltet und für einen möglichen Beobachter der Oberfläche 101 zu sehen.

Wenn der Finger F auch den ersten Bereich 201 verlassen hat, können die Anzeigen sofort oder nach einer gewissen Zeit vollständig oder teilweise ausgeschaltet werden, wobei eine vollständige Abschaltung der Anzeigen 1021, 1022 auch im zeitlichen Abstand zu einer teilweisen Abschaltung erfolgen kann.

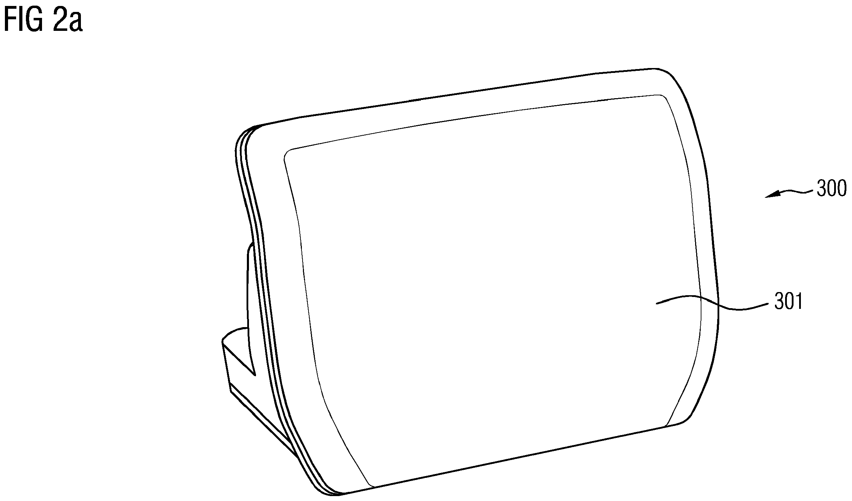

In Figur 2a erkennt man ein zweites Ausführungsbeispiel einer erfindungsgemäßen Bedienvorrichtung 300 mit einer Oberfläche 301. Die Oberfläche 301 weist eine Narbung ähnlich einem Leder auf, sie kann aber auch vollkommen glatt ausgestaltet sein oder auch eine andere Oberflächenstruktur aufweisen. Von den Anzeigen oder Verformungen in Form von Erhöhungen oder Vertiefungen ist nichts wahrnehmbar. Die Oberfläche 301 ist vorzugsweise aus einem elastischen Kunststoffmaterial hergestellt. Es können aber auch elastische Verbundwerkstoffe Verwendung finden. Die Bedienvorrichtung 300 ist in Figur 2a als Einzelgerät dargestellt. Sie kann aber auch in eine größere Baueinheit wie beispielsweise eine Mittelkonsole oder ein Armaturenbrett eines Kraftfahrzeuges integriert sein.

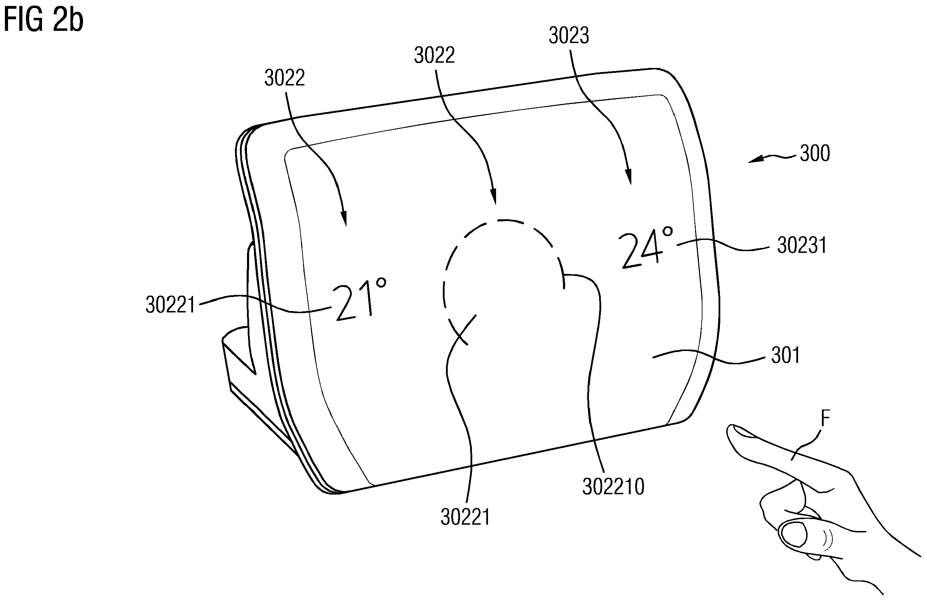

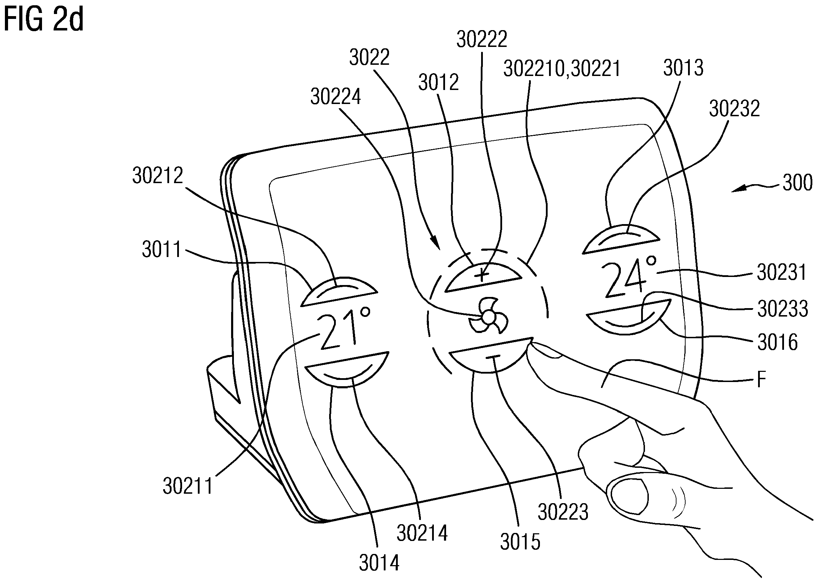

In Figur 2b erkennt man zusätzlich auf der Oberfläche 301 Anzeigen 30211, 30221, 30231, die jeweils ein Teil von in den Figuren 2b, 2d vollständig dargestellten Anzeigen 3021, 3022, 3023 sind und Teile einer Hand mit einem Finger F einer ansonsten nicht dargestellten Bedienperson. Der Finger F befindet sich in einem von der Oberfläche 301 entfernteren ersten Bereich, so dass die Anzeigen 3021, 3022, 3023 teilweise eingeschaltet werden bzw. sind. Die Anzeigen 30211, 30231 stellen im Beispiel jeweils den Sollwert einer Klimaanlage in einem bestimmten Bereich eines Kraftfahrzeuges dar, während die Anzeige 30221 mit einer bestimmten Anzahl von Teilkreisstrichen 302210 die eingeschaltete Stufe eines Gebläses der Klimaanlage darstellt. Es ist auch möglich, in diesem Stadium die Anzeigen 3021, 3022, 3023 vollständig einzuschalten.

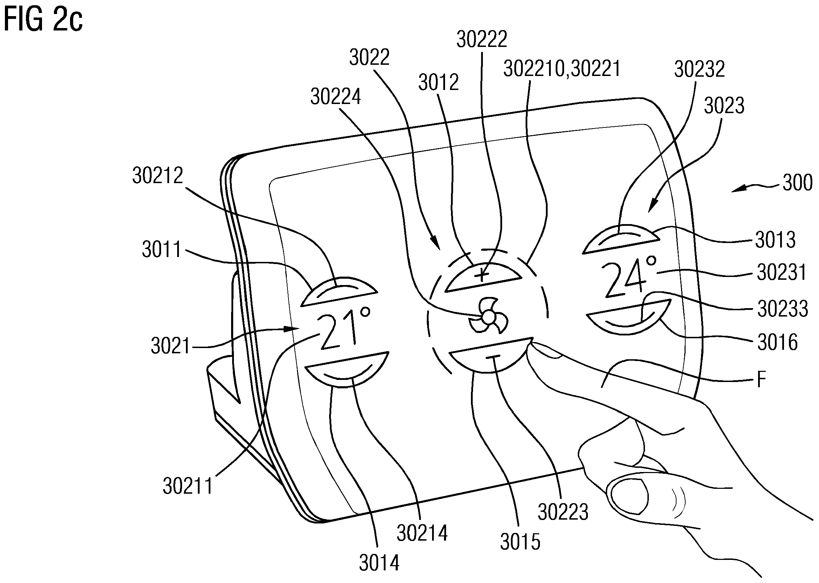

In Figur 2c befindet sich der Finger F in einem zweiten, der Oberfläche 301 näheren Bereich, so dass die Oberfläche 301 zu Verformungen 3011, 3012, 3013, 3014, 3015, 3016 in Form von nachgebildeten Bedienelementen von Schaltern verändert ist. Weiterhin sind von den Anzeigen 3021, 3022, 3023 deren zusätzliche Teile 30212, 30213, 30222, 30223, 30232, 30233 zu sehen, die jeweils auf den Verformungen 3011, 3012, 3013, 3014, 3015, 3016 angeordnet sind und so einen Hinweis auf die jeweilige Funktion der jeweiligen Verformung geben. Weiterhin weist die Anzeige 3022 eine Anzeige 30224 in Form eines Piktogramms in Formeines Lüfterrades auf, welches einen Hinweis darauf gibt, dass die Anzeige 3022 und die Erhebungen 3012, 3014 einer Gebläse-Steuerung zugeordnet sind. Die Anzeigen 30212, 30232 sind als rote Teilkreisbögen gestaltet, die Anzeigen 30214, 30216 als blaue Teilkreisbögen gestaltet und geben so den Hinweis, dass Betätigung der ihnen zugeordneten Verformungen zur Erhöhung bzw. Erniedrigung der Sollwerte der Klimaanlage führen.

In Figur 2d ist eine Situation kurz nach Drücken der Verformung 3015 dargestellt: bei der Anzeige 3022 sind nur noch sechs Teilkreisstriche 302210 beleuchtet, da durch das Drücken der Verformung 3015 das Gebläse um eine Stufe erniedrigt wurde und das Gebläse auf einer Stufe sechs statt zuvor auf einer Stufe sieben geschaltet ist.

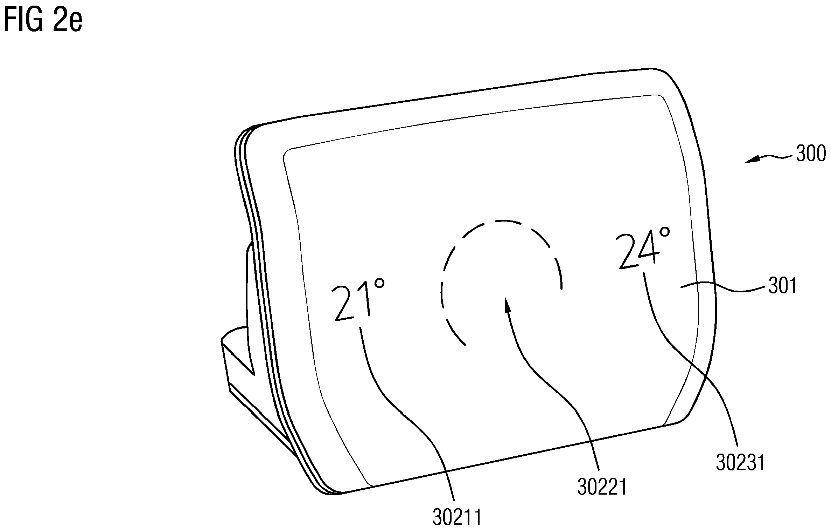

In Figur 2e ist der Finger F so weit entfernt, dass er nicht mehr zu sehen ist, die Anzeigen 30211, 30221, 30231 sind noch eingeschaltet und deshalb wahrnehmbar. Sie können nun dauerhaft eingeschaltet sein oder nach einer vorgegebenen Zeitdauer von der Bedienvorrichtung 300 ausgeschaltet werden.

## Patentansprüche

1. Bedienvorrichtung (100, 300) zur Bedienung mindestens eines Gerätes, wobei die Bedienvorrichtung (100, 300) eine Oberfläche (301) mit einer Form und mit einer Anzeige (1021, 1022, 3021, 3022, 3023) aufweist und wobei bei Annäherung eines Bedienorgans (F) in Richtung der Bedienvorrichtung (300) die Form der Oberfläche (301) verändert und die Anzeige (1021, 1022, 3021, 3022, 3023) eingeschaltet wird, **dadurch gekennzeichnet, dass** bei einem Eindringen des Bedienorgans (F) in einen ersten, von der Bedienvorrichtung entfernteren Bereich (201) die Anzeige (1021, 1022, 3021, 3022, 3023) vollständig/oder teilweise eingeschaltet wird und bei einem Eindringen des Bedienorgans (F) in einen zweiten, der Bedienvorrichtung näheren Bereich (202) die Form der Oberfläche (301) zu Verformungen (1011, 1012, 3011, 3012, 3013, 3014, 3015, 3016) verändert wird.

2. Bedienvorrichtung (100, 300) nach Patentanspruch 1, **dadurch gekennzeichnet, dass** die Anzeige (1021, 1022, 3021, 3022, 3023) zur Darstellung des zu bedienenden Gerätes und/oder eines Wertes, insbesondere eines Messwertes oder des Betriebszustands des mindestens einen Gerätes, ausgestaltet ist.

3. Bedienvorrichtung (100, 300) nach einem der vorstehenden Patentansprüche, **dadurch gekennzeichnet, dass** die Verformung der Oberfläche (301) als mindestens eine Erhöhung (1011, 3011, 3012, 3013, 3014, 3015, 3016) und/oder mindestens eine Vertiefung (1012) veränderbar ist.

4. Bedienvorrichtung (100, 300) nach einem der vorstehenden Patentansprüche, **dadurch gekennzeichnet, dass** mit der Verformung der Oberfläche Schalter oder Bedienelemente von Schaltern (1011, 1012, 3011, 3012, 3013, 3014, 3015, 3016) darstellbar sind.

5. Bedienvorrichtung (100, 300) nach einem der vorstehenden Patentansprüche, **dadurch gekennzeichnet, dass** bei einer Bewegung des Eingabeorgans (F) parallel zur Oberfläche (101, 301) die Anzeige (1021, 1022, 3021, 3022, 3023) nicht eingeschaltet wird.

6. Bedienvorrichtung (100, 300) nach einem der vorstehenden Patentansprüche, **dadurch gekennzeichnet, dass** bei einer Bewegung des Eingabeorgans parallel zur Oberfläche die Oberfläche (101, 301) nicht verformt wird.

7. Bedienvorrichtung (100, 300) nach einem der vorstehenden Patentansprüche, **dadurch gekennzeichnet, dass** als Bedienorgan ein Finger (F), insbesondere ein Zeigefinger einer Bedienperson verwendet wird.

8. Bedienvorrichtung (100, 300) nach einem der vorstehenden Patentansprüche, **dadurch gekennzeichnet, dass** sie eine Sensorvorrichtung zum Feststellen der Position und/oder Bewegung des Eingabeorgans aufweist.

9. Bedienvorrichtung (100, 300) nach einem der vorstehenden Patentansprüche 1-7, **dadurch gekennzeichnet, dass** sie mit einer Sensorvorrichtung zum Feststellen der Position und/oder Bewegung des Eingabeorgans verbunden ist.

10. Bedienvorrichtung (100, 300) nach einem der vorstehenden Patentansprüche, **dadurch gekennzeichnet, dass** sie über einen Datenbus mit dem zu bedienenden Gerät oder dem Steuergerät des zu bedienenden Gerätes verbunden ist.

11. Verfahren zur Bedienung einer Bedienvorrichtung (100, 300) mit den Merkmalen einer oder mehrerer der vorstehenden Patentansprüche, **dadurch gekennzeichnet, dass** bei einem Eindringen des Bedienorgans (F) in den ersten, von der Bedienvorrichtung entfernteren Bereich (201) die Anzeige (1021, 1022, 3021, 3022, 3023) eingeschaltet wird und bei einem Eindringen des Bedienorgans (F) in den zweiten, der Bedienvorrichtung (100, 300)näheren Bereich (202) die Form der Oberfläche (301)verändert wird.

12. Verfahren nach Patentanspruch 11, **dadurch gekennzeichnet, dass** mit der Anzeige (1021, 1022,3021, 3022, 3023) das zu bedienende Gerät und/oder ein Wert, insbesondere ein Messwert oder ein Betriebszustand des mindestens einen Gerätes dargestellt wird.

13. Verfahren nach Patentanspruch 11 oder 12, **dadurch gekennzeichnet, dass** die Form der Oberfläche (101, 301) als mindestens eine Erhöhung und/oder mindestens eine Vertiefung verändert wird.

14. Verfahren nach einem der vorstehenden Patentansprüche 11-13, **dadurch gekennzeichnet, dass** mit der Form der Oberfläche mindestens ein Schalter oder mindestens ein Bedienelement eines Schalters (1011, 1012, 3011, 3012, 3013, 3014, 3015, 3016) darstellt wird.

15. Verfahren nach einem der vorstehenden Patentansprüche 11-14, **dadurch gekennzeichnet, dass** bei einer Bewegung des Eingabeorgans (F) parallel zur Oberfläche (101, 301) die Anzeige (1021, 1022, 3021, 3022, 3023) nicht eingeschaltet wird.

16. Verfahren nach einem der vorstehenden Patentansprüche 11-15, **dadurch gekennzeichnet, dass** bei einer Bewegung des Eingabeorgans (F) parallel zur Oberfläche (101, 301) die die Oberfläche (101, 301) nicht verformt wird.

## Claims

1. Operator control apparatus (100, 300) for operating at least one device, wherein the operator control apparatus (100, 300) has a surface (301) with a shape and with a display (1021, 1022, 3021, 3022, 3023), and wherein the shape of the surface (301) changes and the display (1021, 1022, 3021, 3022, 3023) is switched on when an operator control member (F) is brought closer to the operator control apparatus (300), **characterized in that** the display (1021, 1022, 3021, 3022, 3023) is completely or partly switched on when the operator control member (F) penetrates a first region (201), which is further away from the operator control apparatus, and the shape of the surface (301) is changed to form deformations (1011, 1012, 3011, 3012, 3013, 3014, 3015, 3016) when the operator control member (F) penetrates a second region (202), which is closer to the operator control apparatus.

2. Operator control apparatus (100, 300) according to Patent Claim 1, **characterized in that** the display (1021, 1022, 3021, 3022, 3023) is designed to represent the device to be operated and/or a value, in particular a measurement value or the operating state of the at least one device.

3. Operator control apparatus (100, 300) according to either of the preceding patent claims, **characterized in that** the deformation of the surface (301) as at least one raised portion (1011, 3011, 3012, 3013, 3014, 3015, 3016) and/or at least one recess (1012) can be changed.

4. Operator control apparatus (100, 300) according to one of the preceding patent claims, **characterized in that** switches or operator control elements of switches (1011, 1012, 3011, 3012, 3013, 3014, 3015, 3016) can be represented by way of the deformation of the surface.

5. Operator control apparatus (100, 300) according to one of the preceding patent claims, **characterized in that** the display (1021, 1022, 3021, 3022, 3023) is not switched on when the input member (F) moves parallel to the surface (101, 301).

6. Operator control apparatus (100, 300) according to one of the preceding patent claims, **characterized in that** the surface (101, 301) is not deformed when the input member moves parallel to the surface.

7. Operator control apparatus (100, 300) according to one of the preceding patent claims, **characterized in that** the operator control member used is a finger (F), in particular an index finger of an operator.

8. Operator control apparatus (100, 300) according to one of the preceding patent claims, **characterized in that** it has a sensor apparatus for establishing the position and/or movement of the input member.

9. Operator control apparatus (100, 300) according to one of the preceding Patent Claims 1-7, **characterized in that** it is connected to a sensor apparatus for establishing the position and/or movement of the input element.

10. Operator control apparatus (100, 300) according to one of the preceding patent claims, **characterized in that** it is connected to the device to be operated or the controller of the device to be operated via a data bus.

11. Method for operating an operator control apparatus (100, 300) having the features of one or more of the preceding patent claims, **characterized in that** the display (1021, 1022, 3021, 3022, 3023) is switched on when the operator control member (F) penetrates the first region (201), which is further away from the operator control apparatus, and the shape of the surface (301) is changed when the operator control member (F) penetrates the second region (202), which is closer to the operator control apparatus (100, 300).

12. Method according to Patent Claim 11, **characterized in that** the device to be operated and/or a value, in particular a measurement value or an operating state of the at least one device, is represented by the display (1021, 1022, 3021, 3022, 3023).

13. Method according to Patent Claim 11 or 12, **characterized in that** the shape of the surface (101, 301) is changed to form at least one raised portion and/or at least one recess.

14. Method according to one of the preceding Patent Claims 11-13, **characterized in that** at least one switch or at least one operator control element of a switch (1011, 1012, 3011, 3012, 3013, 3014, 3015, 3016) is represented by the shape of the surface.

15. Method according to one of the preceding Patent Claims 11-14, **characterized in that** the display (1021, 1022, 3021, 3022, 3023) is not switched on when the input member (F) moves parallel to the surface (101, 301).

16. Method according to one of the preceding Patent Claims 11-15, **characterized in that** the surface (101, 301) is not deformed when the input member (F) moves parallel to the surface (101, 301).

## Revendications

1. Dispositif d'utilisation (100, 300) permettant d'utiliser au moins un appareil, le dispositif d'utilisation (100, 300) présentant une surface (301) pourvue d'une forme et d'un affichage (1021, 1022, 3021, 3022, 3023), et dans lequel, à l'approche d'un organe d'utilisation (F) en direction du dispositif d'utilisation (300), la forme de la surface (301) change et l'affichage (1021, 1022, 3021, 3022, 3023) est activé,
**caractérisé en ce que**, quand l'organe d'utilisation (F) pénètre dans une première zone (201) plus éloignée du dispositif d'utilisation, l'affichage (1021, 1022, 3021, 3022, 3023) est activé complètement ou partiellement, et quand l'organe d'utilisation (F) pénètre dans une deuxième zone (202) plus proche du dispositif d'utilisation, la forme de la surface (301) change en déformations (1011, 1012, 3011, 3012, 3013, 3014, 3015, 3016).

2. Dispositif d'utilisation (100, 300) selon la revendication 1, **caractérisé en ce que** l'affichage (1021, 1022, 3021, 3022, 3023) est configuré pour représenter l'appareil à utiliser et/ou une valeur, en particulier une valeur de mesure, ou l'état de fonctionnement du au moins un appareil.

3. Dispositif d'utilisation (100, 300) selon l'une quelconque des revendications précédentes, **caractérisé en ce que** la déformation de la surface (301) peut changer sous la forme d'au moins un relief (1011, 3011, 3012, 3013, 3014, 3015, 3016) et/ou d'au moins un creux (1012).

4. Dispositif d'utilisation (100, 300) selon l'une quelconque des revendications précédentes, **caractérisé en ce que** la déformation de la surface permet de représenter des interrupteurs ou des éléments d'utilisation d'interrupteurs (1011, 1012, 3011, 3012, 3013, 3014, 3015, 3016).

5. Dispositif d'utilisation (100, 300) selon l'une quelconque des revendications précédentes, **caractérisé en ce que** lors d'un mouvement de l'organe d'entrée (F) en parallèle à la surface (101, 301) l'affichage (1021, 1022, 3021, 3022, 3023) n'est pas activé.

6. Dispositif d'utilisation (100, 300) selon l'une quelconque des revendications précédentes, **caractérisé en ce que** lors d'un mouvement de l'organe d'entrée en parallèle à la surface, la surface (101, 301) n'est pas déformée.

7. Dispositif d'utilisation (100, 300) selon l'une quelconque des revendications précédentes, **caractérisé en ce qu'**un doigt (F), en particulier l'index d'un utilisateur, est utilisé comme organe d'utilisation.

8. Dispositif d'utilisation (100, 300) selon l'une quelconque des revendications précédentes, **caractérisé en ce qu'**il présente un dispositif capteur pour établir la position et/ou le mouvement de l'organe d'entrée.

9. Dispositif d'utilisation (100, 300) selon l'une quelconque des revendications précédentes 1 à 7, **caractérisé en ce qu'**il est relié à un dispositif capteur pour établir la position et/ou le mouvement de l'organe d'entrée.

10. Dispositif d'utilisation (100, 300) selon l'une quelconque des revendications précédentes, **caractérisé en ce qu'**il est relié par l'intermédiaire d'un bus de données à l'appareil à utiliser ou au contrôleur de l'appareil à utiliser.

11. Procédé permettant d'utiliser un dispositif d'utilisation (100, 300) ayant les particularités d'une ou de plusieurs des revendications précédentes, **caractérisé en ce que**, quand l'organe d'utilisation (F) pénètre dans la première zone (201) plus éloignée du dispositif d'utilisation, l'affichage (1021, 1022, 3021, 3022, 3023) est activé, et quand l'organe d'utilisation (F) pénètre dans la deuxième zone (202) plus proche du dispositif d'utilisation (100, 300), la forme de la surface (301) change.

12. Procédé selon la revendication 11, **caractérisé en ce que** l'affichage (1021, 1022, 3021, 3022, 3023) représente l'appareil à utiliser et/ou une valeur, en particulier une valeur de mesure, ou un état de fonctionnement du au moins un appareil.

13. Procédé selon la revendication 11 ou 12, **caractérisé en ce que** la forme de la surface (101, 301) change en au moins un relief et/ou au moins un creux.

14. Procédé selon l'une quelconque des revendications précédentes 11 à 13, **caractérisé en ce que** la forme de la surface représente au moins un interrupteur ou au moins un élément d'utilisation d'un interrupteur (1011, 1012, 3011, 3012, 3013, 3014, 3015, 3016).

15. Procédé selon l'une quelconque des revendications précédentes 11 à 14, **caractérisé en ce que** lors d'un mouvement de l'organe d'entrée (F) en parallèle à la surface (101, 301), l'affichage (1021, 1022, 3021, 3022, 3023) n'est pas activé.

16. Procédé selon l'une quelconque des revendications précédentes 11 à 15, **caractérisé en ce que** lors d'un mouvement de l'organe d'entrée (F) en parallèle à la surface (101, 301), la surface (101, 301) n'est pas déformée.
